**Europäisches Patentamt**

**European Patent Office**

**Office européen des brevets**

(19)

(11) Numéro de publication: **0 176 461**
**B1**

(12)

# FASCICULE DE BREVET EUROPEEN

(45) Date de publication du fascicule du brevet: **11.04.90**

(51) Int. Cl.⁵: **G 01 F 11/26**

(21) Numéro de dépôt: **85450020.4**

(22) Date de dépôt: **11.09.85**

(54) Perfectionnement au bouchon doseur verseur de liquides.

(30) Priorité: **11.09.84 FR 8414022**

(43) Date de publication de la demande:
**02.04.86 Bulletin 86/14**

(45) Mention de la délivrance du brevet:
**11.04.90 Bulletin 90/15**

(84) Etats contractants désignés:
**AT BE CH DE FR GB IT LI LU NL SE**

(56) Documents cités:
**DE-A-2 023 014**
**DE-A-3 308 012**
**FR-A- 652 027**
**US-A-3 097 769**
**US-A-3 184 106**
**US-A-3 968 907**

(73) Titulaire: **Pecharman, Jacques**
**Lamourio Montdoumerc**
**F-46230 Lalbenque (FR)**
(73) Titulaire: **Villar, Robert**
**Courounelle**
**F-82350 Albias (FR)**

(72) Inventeur: **Pecharman, Jacques**
**Lamourio Montdoumerc**
**F-46230 Lalbenque (FR)**
Inventeur: **Villar, Robert**
**Courounelle**
**F-82350 Albias (FR)**

(74) Mandataire: **Ravina, Bernard**
**Cabinet Bernard RAVINA 24, boulevard Riquet**
**F-31000 Toulouse (FR)**

Courier Press, Leamington Spa, England.

## Description

La présente invention a pour objet des perfectionnements aux bouchons doseurs distributeurs de liquides, du type de ceux destinés à se monter sur le col d'une bouteille.

De tels bouchons doseurs, verseurs de liquides s'emmanchent dans le col de la bouteille et comportent un bulbe dans lequel est pratiqué une chambre sphérique qui communique, d'une part, avec l'atmosphère par une ouverture pratiquée dans la paroi du bulbe et d'autre part, avec la bouteille par un tube plongeur qui s'engage dans cette dernière.

Dans la chambre interne du bulbe est disposée une chambre de dosage dans laquelle l'engage un tube verseur, par lequel la dose de liquide s'écoule vers l'extérieur.

A ce tube est raccordé, dans la chambre de dosage, un tube évent qui pénètre dans la bouteille.

Ce tube évent permet l'introduction dans la bouteille d'une certaine quantité d'air lorsque la dite bouteille est renversée, c'est à dire lorsque le bouchon verseur doseur se trouve disposé suivant un niveau inférieur par rapport à cette dernière.

L'introduction d'une quantité d'air dans la bouteille permet au liquide contenu dans celle-ci de s'écouler dans la chambre sphérique de bulbe. Le niveau de liquide dans cette chambre et dans la chambre de dosage monte progressivement jusqu'à parvenir au niveau de l'extrémité supérieure du tube siphon ou tube verseur.

A ce stade, il se créé un effet de siphon entre la chambre de dosage et le tube verseur.

Ainsi, le liquide contenu dans la chambre sphérique et dans la chambre de dosage s'écoule vers l'extérieur.

Il y a lieu de noter que l'orifice de communication du tube évent au tube verseur est obstrué par le liquide lorsque celui-ci s'écoule vers l'extérieur.

Cette caractéristique permet, lorsque le niveau du liquide contenu dans la chambre sphérique du bulbe atteint l'extrémité inférieure de la chambre de dosage, de créer une prise d'air qui interrompt l'effet de siphon.

A ce stade, une nouvelle quantité d'air est réintroduite dans la bouteille, via le tube verseur et le tube évent, et le liquide contenu dans la bouteille peut de nouveau s'écouler vers la chambre sphérique.

Un tel bouchon doseur verseur est décrit dans le brevet FR—A—652.027 du 31 mars 1928 et dans le brevet DE—A—2 023 014.

Généralement, à chaque dose à distribuer correspond un modèle de bouchon verseur qui ne diffère des autres modèles que par ses caractéristiques dimensionnelles, c'est à dire, volume de la chambre sphérique et volume de la chambre de dosage.

Il résulte de cet inconvénient une impossibilité de rationaliser de manière optimale la fabrication d'une gamme de modèles de bouchons doseurs verseurs.

Pour résoudre cet inconvénient, on a proposé des modèles uniques de bouchons doseurs pour lesquels la variation de la dose de liquide est réalisée par adjonction de bloc de volumes adaptés dans la chambre du bulbe.

Ces blocs ont pour but de diminuer le volume de la chambre sphérique du bulbe, et par voie de conséquence, de diminuer la quantité de liquide que reçoit cette chambre.

Ce mode de réalisation bien qu'il permet de produire des bouchons délivrant des doses différentes à partir d'un modèle unique de bouchon, ne permet pas de résoudre en totalité le problème sus-évoqué.

En effet, le constructeur devra réaliser des blocs de différents modèles qui diffèrent les uns des autres par leur volume. On connaît également d'autres bouchons doseurs pour lesquels la variation de la quantité de la dose de liquide est réalisée par modification du degré d'enfoncement du tube verseur dans la chambre de dosage.

De ce fait, le tube évent ne peut plus déboucher directement dans le tube verseur et débouche dans la chambre de dosage dans le fond de cette dernière. Il est apparu à l'usage que ce type de bouchon doseur ne donne pas entière satisfaction sur le plan fonctionnel.

Un autre inconvénient du type de bouchon doseur, objet du brevet FR—A—652.027 et DE—A—2.023.014, résulte du fait que l'extrémité du tube de remplissage située dans la chambre sphérique doit se trouver sous le niveau du liquide contenu dans celle-ci, lorsque l'effet de siphon s'interrompt.

Cette disposition qui est nécessaire au bon fonctionnement du bouchon doseur, interdit lorsque la bouteille est rangée, tout retour dans cette dernière du liquide contenu dans la sphère, ce retour devant s'effectuer par le tube de remplissage. Cet inconvénient présente un danger grave en raison du fait que le liquide contenu dans la sphère peut à la faveur d'une non utilisation prolongée détruire le revêtement interne de la sphère et attaquer la paroi de cette dernière. Il se forme alors un composé particulièrement nocif.

La présente invention a pour objet de pallier les différents inconvénients précédemment cités en mettant en oeuvre un bouchon doseur perfectionné à partir duquel différentes doses peuvent être distribuées sans pour autant modifier ses dimensions.

Un autre but de la présente invention est la mise en oeuvre d'un bouchon doseur perfectionné pour lequel la chambre sphérique peut facilement se vider de son contenu lorsque la bouteille est rangée.

A cet effet, le bouchon doseur comporte un bulbe (1) qui est équipé d'un col (8) qui reçoit un bouchon pour se fixer au goulot de la bouteille, une chambre sphérique étant pratiquée dans le bulbe et étant en relation avec l'atmosphère par une ouverture (3) pratiquée dans la paroi du bulbe et avec le contenu de la bouteille par un conduit de remplissage (4) dont l'embouchure dans la dite chambre est disposée à un niveau inférieur par rapport à celle de la chambre de dosage dans laquelle pénètre un tue verseur (6) par lequel la dose de liquide s'écoule vers l'extérieur par effet de siphon, le dit tube verseur étant raccordé dans la chambre de dosage à un conduit étant (7) qui pénètre dans la bouteille, le dit conduit (7) ainsi que le conduit (4) et la chambre de dosage (5) étant ménagés dans une seule et même pièce (12) qui présente une première portion cylindrique (12A) raccordée de manière oblique et sécante à une seconde portion (12B), la portion (12A) s'engageant dans le col (8) et la seconde dans la chambre sphérique, bouchon caractérisé essentiellement en ce que la paroi de la chambre de dosage est percée par au moins un deuxième orifice (23) (le premier étant constitué par l'embouchure) situé entre le fond de la chambre et l'embouchure de cette dernière, le volume de la dose à distribuer étant conditionné par la distance séparant cet orifice du fond de la chambre de dosage.

On conçoit aisément qu'en diminuant ou en accroissant cette distance, l'homme de métier peut facilement ajuster le volume de la dose à distribuer tout en utilisant un modèle unique de bouchon.

Selon une autre caractéristique de l'invention, le bouchon doseur, verseur est doté:

d'un conduit pratiqué dans l'épaisseur du col de bulbe qui débouche, d'une part, dans la chambre sphérique à proximité de la paroi du tube de remplissage et d'autre part, dans ce dernier,

et d'un organe d'obturation monté dans le conduit qui obture ce dernier uniquement que lorsque la bouteille est renversée et qui libère ce dernier lorsque la bouteille est redressée.

Ainsi comme ce conduit débouche dans la chambre sphérique à proximité du tube de remplissage, tout le liquide contenu dans la dite chambre s'écoulera dans la bouteille.

D'autres avantages de l'invention apparaîtront à la lecture de la description d'une forme préférentielle de réalisation en se referant aux dessins annexés en lesquels:

la figure 1 est une vue en coupe du bouchon verseur selon l'invention,

la figure 2 est une vue en coupe du bouchon doseur, ce dernier étant en position de versage,

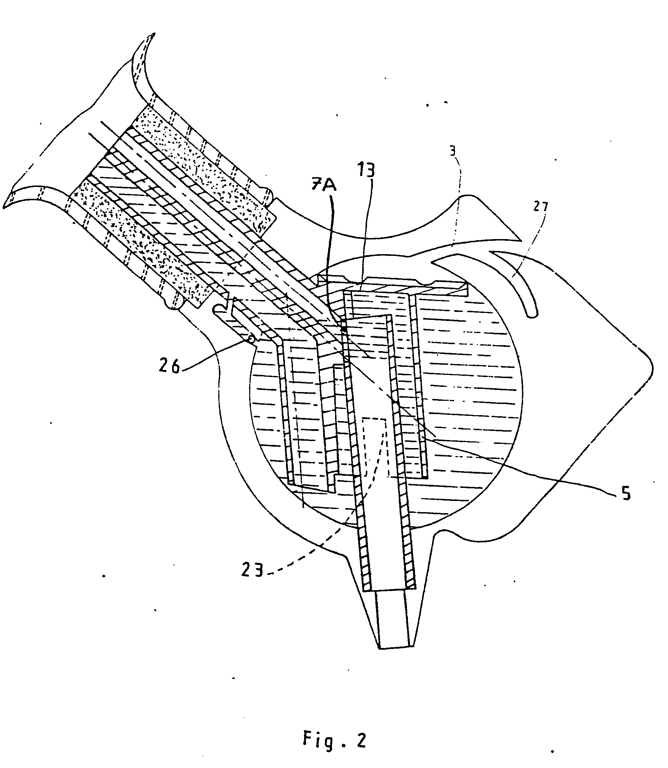

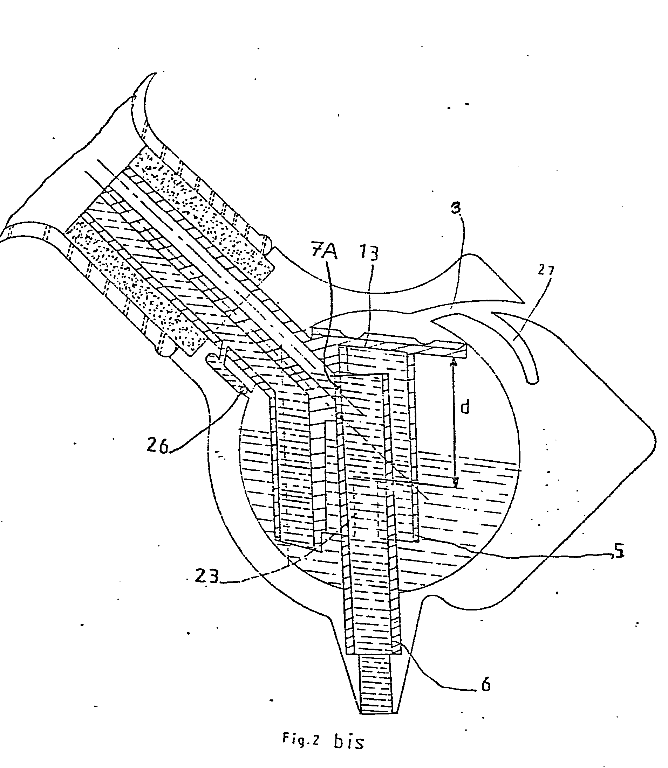

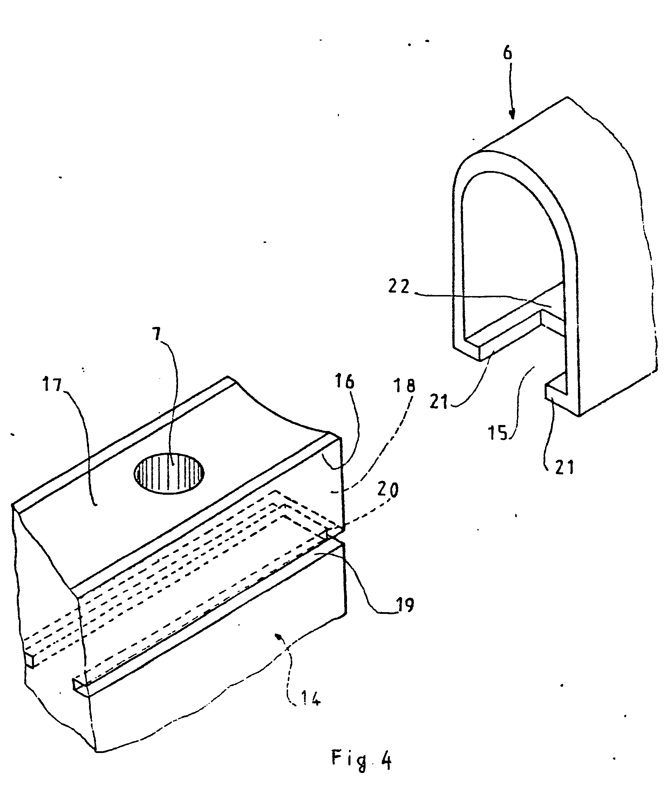

la figure 2bis est une vue en coupe du bouchon doseur, la dose de liquide s'évacuant de ce dernier,

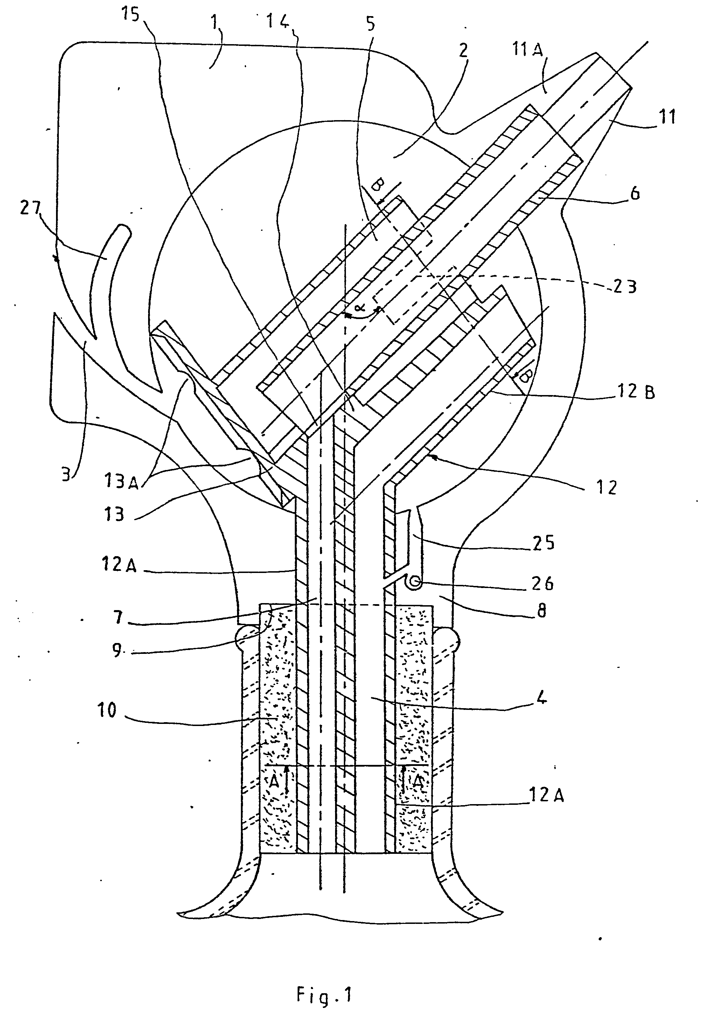

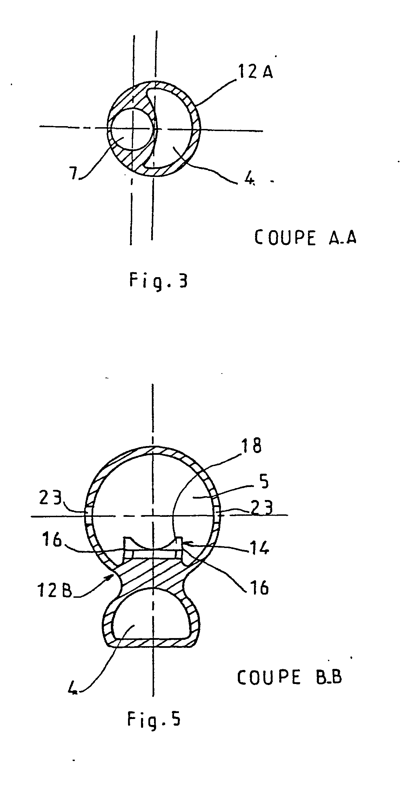

la figure 3 est une section suivant la ligne AA de la figure 1,

la figure 4 est une vue en perspective et en éclaté de l'extrémité du tube verseur et du bossage qui reçoit la dite extrémité,

la figure 5 est une section suivant la ligne BB de la figure 1,

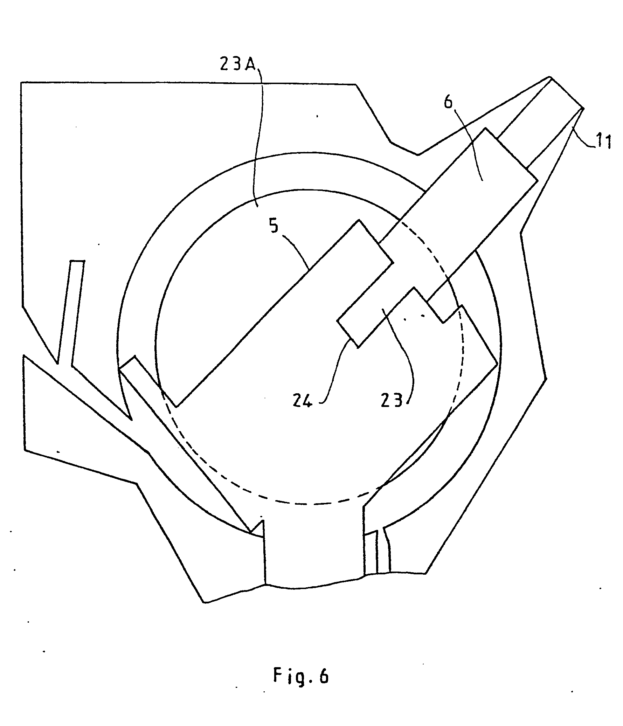

la figure 6 est une vue extérieure de la chambre de dosage 5.

Tel que représenté, le bouchon doseur, verseur est du type de ceux comportant un bulbe 1 dans lequel est pratiquée une chambre sphérique 2, laquelle est en relation, d'une part, avec l'atmosphère par l'intermédiaire d'une ouverture 3 pratiquée dans la paroi du bulbe 1 et d'autre part, est en relation avec le contenu de la bouteille par un conduit de remplissage 4.

La chambre sphérique est équipée d'une chambre de dosage 5 dans laquelle pénètre un tube verseur 6 par lequel la dose de liquide s'écoule vers l'extérieur. Ce tube verseur est raccordé dans la chambre de dosage à un conduit évent 7 qui pénètre dans la bouteille.

Le bulbe 1 est doté d'un col 8 pourvu d'un orifice le traversant de part en part, débouchant dans la chambre sphérique.

Ce col est terminé par un embrèvement 9 dans lequel s'engage un bouchon 10 monté dans le goulot de la bouteille. Ce bouchon 10 est percé de part en part pour assurer le passage aux conduits 7 et 4.

Le bulbe 1 est également équipé d'un bec verseur 11 qui est en relation avec le tube verseur 6.

Selon une forme préférentielle de réalisation, le bulbe 1 est constitué par deux demi-coquilles assemblées l'une à l'autre par soudage ou par tout autre procédé connu de l'homme de l'art.

Toujours suivant une forme préférentielle de réalisation, le conduit de remplissage 4, la chambre de dosage 5 et le conduit évent 7 sont ménagés dans une seule et même pièce 12 qui présente une première portion cylindrique 12A raccordée de manière oblique et de manière sécante à une seconde portion 12B.

La première portion cylindrique 12A est engagée dans le col 8 et dans le bouchon 10 tandis que la seconde portion 12B est disposée dans la chambre sphérique 2 du bulbe 1 suivant un axe parallèle à l'axe du bec verseur 11, en direction de ce dernier.

Le conduit de remplissage 4 est pratiqué dans la première portion cylindrique 12A et dans la seconde portion 12B.

Au niveau de la jonction de la portion cylindrique 12A à la portion 12B, le conduit de remplissage 4 est coudé de manière à s'étendre dans la pièce 12, d'abord parallèlement à l'axe longitudinal de la portion 12A, puis parallèlement à l'axe longitudinal de la portion 12B.

Dans la portion 12B est également ménagée la chambre de dosage 5. Cette chambre de dosage 5 de forme cylindrique est ouverte en direction du bec verseur 11 et est disposée suivant un axe parallèle à l'axe de ce dernier. Cette chambre de dosage (figure 1) est ménagée au-dessus du conduit de remplissage 4.

L'embouchure de la chambre de dosage 5 est légèrement disposée en retrait par rapport à l'embouchure du conduit de remplissage 4 de manière à ce que lorsque le bouchon doseur verse la dose, l'embouchure du dit conduit de remplissage 4 soit disposée à un niveau inférieur par rapport à l'embouchure de la dite chambre de dosage 5.

Du côté opposé à son embouchure, la chambre de dosage 5 est obturée par une paroi en forme de disque circulaire 13 qui est appliquée par son contour contre la paroi de la chambre sphérique 2 du bulbe 1.

Cette paroi 13 constitue le fond de la chambre 5. Le fond circulaire 13 divise la chambre sphérique en deux parties.

La première partie de la chambre sphérique est équipée de la chambre de dosage 5. L'autre partie est en relation avec l'ouverture 3.

Des encoches 13A sont ménagées à la périphérie du fond 13 pour permettre la communication d'air entre la première partie de la chambre sphérique et l'ouverture 3 via la seconde partie de la chambre sphérique.

Le conduit évent 7 est ménagé dans la portion 12A de la pièce 12 et s'étend parallèlement à l'axe longitudinal de la dite portion 12A.

Selon une forme préférentielle de réalisation, le conduit évent 7 est de forme cylindrique tandis que le conduit de remplissage 4 dans la portion cylindrique 12A présente une section droite en forme de croissant dont les pointes sont tournées vers le conduit 7 (fig. 3). Cette disposition permet du conduit 4 d'occuper un volume maximum dans la portion cylindrique 12A.

Le conduit évent 7 traverse la paroi 13 de la chambre de dosage 5 pour communiquer avec le tube verseur 6. Avantageusement, la chambre de dosage 5 comporte un bossage interne 14 en saillie sur sa face cylindrique. Selon une forme préférentielle de réalisation, ce bossage est raccordé au fond 13.

Selon une autre forme de réalisation, ce bossage est écarté de ce fond.

Ce bossage 14 est traversé par le conduit évent 7 et reçoit en fixation l'extrémité du tube verseur 6, lequel présente une ouverture 15 qui vient en correspondance avec l'embouchure 7A du conduit évent 7, la dite ouverture 15 étant ménagée dans la paroi du tube 6. L'embouchure 7A est l'embouchure qui est en relation avec le tube verseur 6.

Selon une forme préférentielle de réalisation, le bossage 14 se présente de manière générale sous la forme d'un parallélèpipède rectangle.

Ce bossage 14 présente deux faces latérales 16 parallèles, qui se raccordent chacune à une des génératrices de la surface interne cylindrique de la chambre de dosage 5, une face supérieure 17 dans laquelle débouche le conduit évent 7, la dite face étant parallèle à l'axe du tube verseur 6 et une face avant 18 plane perpendiculaire aux deux faces latérales 16 et perpendiculaire à l'axe longitudinal du tube verseur 6.

La face avant 18 est la face du bossage qui est tournée en regard de l'embouchure de la chambre de dosage 5.

L'ouverture 16 du tube verseur 6 est pratiquée dans la portion de ce tube qui pénètre dans la chambre de dosage et court jusqu'à l'extrémité de cette portion.

Pour fixer ce tube au bossage 14, la bordure de l'ouverture 15 est engagée suivant un mouvement axial dans trois rainures dont deux, les rainures 19, sont pratiquées dans les faces latérales 16 et dont l'autre, la rainure 20, est pratiquée dans la face avant 18 du bossage 14 (Fig. 4).

Ces trois rainures sont disposées suivant un même plan. Les deux rainures latérales 19 débouchent dans la rainure avant 20. De préférence, la portion du tube 6 qui pénètre dans la chambre de dosage 5 pour coopérer en blocage avec le bossage 14 est conformée de manière à se développer suivant un "U" surmonté par une paroi cintrée en arc de circonférence.

La forme en "U" et la paroi cintrée sont raccordées au tube 6. L'ouverture 15 épouse le contour d'un rectangle.

Cette ouverture est pratiquée dans l'âme du "U" à écartement des ailes de celui-ci pour laisser apparaître deux tenons latéraux 21 qui s'engagent chacun dans une des rainures latérales 19 du bossage.

L'ouverture 15 est limitée dans le sens axial par un bord 22 perpendiculaire aux tenons 21. Ce bord 22 s'engage dans la rainure 20 de la face avant 18 du bossage 14.

Après engagement des tenons latéraux 21 et du bord 22, respectivement dans les rainures 19 et dans la rainure 20, le tube verseur 6 est fixé au bossage 14 par tous procédés et moyens connus de l'homme de l'art.

Avantageusement, la face supérieure 17 du bossage est de forme concave.

Plus précisément, cette face supérieure 17 est cintrée en arc de circonférence de cercle dont le rayon est identique au rayon interne du tube, en sorte que la dite face 17 prolonge axialement la surface intérieure de ce tube.

Au niveau du bec verseur 11, le tube verseur 6 est engagé dans un lamage 11A pratiqué dans ce dernier coaxialement à son axe.

Il est à noter que le tube verseur 6 présente une longeur suffisante pour être en contact, d'une part, avec le fond du lamage 11A et d'autre part, avec le fond de la rainure 20. Ainsi, ce tube verseur 6 est maintenu par ses deux extrémités dans le bouchon doseur et ne peut se déplacer suivant son axe.

La paroi de la chambre de dosage 5, entre l'embouchure de cette dernière et le fond 13, est percée par au moins un orifice 23 dont la distance d qui sépare cet orifice du fond 13 conditionne la quantité de la dose à distribuer (figure 2bis).

De plus, pour assurer un fonctionnement correct, il est nécessaire qui l'orifice 23 soit situé lorsque le bouchon doseur est en fonctionnement, en dessous de l'embouchure 7A, du conduit évent 7 (fig. 2 et 2bis).

Cet orifice 23 a pour rôle de créer une prise d'air qui interrompt l'effet de siphon lorsque le niveau de liquide contenu dans la chambre sphérique 2 parvient à son niveau. On conçoit aisément qu'en déplaçant la position de cet orifice 23 le long de la paroi de la chambre de dosage 5, il est possible de realiser des bouchons doseurs délivrant des doses de quantité différentes. Ce déplacement doit toujours tenir compte de la condition sus-évoquée.

Selon une forme préférée de réalisation, l'orifice 23 est ménagé dans la paroi de la chambre 5 latéralement au plan géométrique défini par l'axe longitudinal de la bouteille et par l'axe longitudinal de la chambre de dosage 5. Cette caractéristique permet d'améliorer la précision de la dose
délivrée.

Selon une forme préférée de réalisation, la
chambre de dosage 5 est percée suivant un de ses
diamétres de deux orifices 23 qui sont toujours
disposés latéralement par rapport au plan sus-
évoqué.

Avantageusement, chaque orifice 23 est constitué par une entaille de forme trapezoidale.

Cette entaille court jusqu'à à l'embouchure de
la chambre de dosage et est limitée axialement
par un bord 24 qui se développe suivant un plan
parallèle au plan de l'embouchure de la chambre
5.

Ce plan est oblique par rapport au tube verseur.
A titre d'exemple, l'angle relatif à l'inclinaison du
bord 24 par rapport au tube verseur est égal à 83
degrées (à dans la figure 1).

Lors de l'utilisation du bouchon doseur, le tube
verseur 6 est incliné par rapport à la verticale
tandis que la plan suivant lequel se développe le
bord 24 de l'orifice 23 est horizontal.

Il est bien évident que la variation de la quantité
de la dose à distribuer pourra être également
effectuée par variation de la longueur de la
chambre de dosage 5.

Avantageusement en combinaison avec l'orifice 23, le bouchon doseur pourra être équipé
d'un moyen 23A qui permet de diminuer le
volume de la chambre sphérique 2 (figure 6).

A titre d'exemple non limitatif, ce moyen est
constitué par un disque circulaire qui se fixe à la
paroi de la chambre sphérique 2. Cette disposition permet d'accroître la gamme de bouchons
doseurs à doses différentes qui peut être réalisée
à partir d'un modèle unique.

Pour permettre au liquide contenu dans la
chambre 2 de retourner dans la bouteille, il est
prévu:

un conduit 25 pratiqué dans l'épaisseur du col
du bulbe qui débouche, d'une part, dans la chambre sphérique à proximité de la pièce 12 et d'autre
part, dans le conduit de remplissage 4,

et un organe d'obturation 26 qui obture le
conduit 25 lorsque la bouteille est renversée.

De préférence, l'organe d'obturation est constitué par une bille et le conduit 25 présente une
première portion de conduit borgne dans laquelle
est montée la bille, la dite portion borgne débouchant dans la chambre sphérique 2 et une
seconde portion de conduit qui débouche dans la
première portion et dans le conduit de remplissage 4.

L'embouchure de la première portion borgne
présente un rétrécissement en forme de siège qui
s'oppose au passage de la bille 26 dans la chambre sphérique 2, et qui s'oppose avec l'aide de la
bille au passage du liquide toujours dans cette
chambre lorsque la bouteille est renversée.

L'embouchure de communication de la
seconde portion de conduit avec la première
portion est écartée du fond de cette dernière. De
cette manière, lorsque la bouteille est redressée, la bille 26 vient se loger dans le fond de la
première portion de conduit et dégage la dite
embouchure.

Comme dit précédemment, le bouchon doseur
est équipé d'une ouverture 3 qui assure la communication de la chambre 2 avec l'atmosphère.
Cette ouverture 3 est constituée par une conduite
qui épouse le contour d'un secteur torique. Avantageusement, un conduit borgne 27 est pratiqué
dans l'épaisseur de la paroi du bulbe et débouche
dans l'ouverture 3.

Cette disposition à pour but de s'opposer à
l'injection du liquide vers l'extérieur par l'intermédiaire de l'ouverture 3. En effet, il a été observé
qu'une certaine quantité de liquide parvient toujours à s'extraire de la chambre sphérique lorsque
celle-ci est complètement remplie.

Le rôle du conduit borgne 27 est de capter cette
quantité de liquide.

Avantageusement, le conduit 27, lorsque la
bouteille est renversée (figure 2), présente une
pente plus prononcée que celle de l'ouverture 3
en sorte de capter le liquide. Lorsque la bouteille
est redressée, le conduit 27 et l'ouverture 3 sont
dirigés vers le haut, ce qui force le liquide à
pénétrer dans la chambre sphérique 2.

Le bouchon doseur, verseur tel que décrit est
avantageusement constitué en une matière synthétique de qualité alimentaire. L'assemblage du
tube verseur 6 au bossage 14 et au bec 11, et
l'assemblage des deux demi-coquilles peut être
réalisés en utilisant les techniques de soudage
connues.

De plus, les différents constituants du bouchon
doseur, verseur sont obtenus par moulage, ce qui
permet une réduction des coûts de fabrication.

Il va de soi que la présente invention peut
recevoir tous aménagements et toutes variantes
sans pour autant sortir du cadre de la présente
invention selon la revendication 1.

**Revendications**

1. Bouchon doseur verseur comportant un
bulbe (1) qui est équipé d'un col (8) qui reçoit un
bouchon pour se fixer au goulot d'une bouteille,
une chambre sphérique (2) étant pratiquée dans
le bulbe et étant en relation avec l'atmosphère par
une ouverture (3) pratiquée dans la paroi du bulbe
et avec le contenu de la bouteille par un conduit
de remplissage (4) dont l'embouchure dans la dite
chambre est disposée à un niveau inférieur par
rapport à celle de la chambre de dosage (5) dans
laquelle pénètre un tube verseur (6) par lequel la
dose de liquide s'écoule vers l'extérieur par effet
de siphon, le dit tube verseur étant raccordé dans
la chambre de dosage (5) à un conduit évent (7)
qui pénètre dans la bouteille, le dit conduit (7)
ainsi que le conduit (4) et la chambre de dosage
(5) étant ménagés dans une seule et même pièce
(12) qui présente une première poriton cylindrique (12A) raccordée de manière oblique et
sécante à une seconde portion (12B), la dite
première portion (12A) s'engageant dans le col (8)
et la dite seconde portion (12B) dans la chambre sphérique (2), bouchon caractérisé en ce que la paroi de la chambre de dosage est percée par au moins un deuxième orifice (23)—le premier étant constitué par l'embouchure—situé entre le fond de la chambre (5) et l'embouchure de cette dernière, le volume de la dose à distribuer étant conditionné par la distance séparant cet orifice (23) du fond de la chambre de dosage (5).

2. Bouchon doseur verseur selon la revendication 1 caractérisé en ce que l'orifice (23) est ménagé dans la paroi de la chambre de dosage (5) latéralement au plan géométrique défini par l'axe longitudinal de la bouteille et par l'axe longitudinal de la dite chambre.

3. Bouchon doseur verseur selon les revendications 1 et 2, caractérisé en ce que la chambre de dosage (5) est percée suivant un de ses diamètres, de deux orifices (23) disposés toujours latéralement au plan défini par l'axe longitudinal de la bouteille et par l'axe longitudinal de la dite chambre (5).

4. Bouchon doseur verseur selon la revendication 1 caractérisé en ce que l'orifice (23) est constitué par une entaille de forme trapezoïdale qui court jusqu'à l'embouchure de la chambre (5) et qui est limitée axialement par un bord (24) qui se développe suivant un plan parallèle au plan de l'embouchure.

5. Bouchon doseur verseur selon la revendication 1 caractérisé en ce qu'il doté d'un moyen (23A) pour diminuer le volume de la chambre sphérique (2).

6. Bouchon verseur doseur selon la revendication 1 caractérisé par un bossage interne (14) dans la chambre de dosage (5) en saillie sur la face cylindrique de la chambre, lequel bossage est traversée par le conduit évent (7) et reçoit en fixation l'extrémité du tube verseur (6) lequel présente une ouverture (15) qui vient en correspondance avec l'embouchure du tube évent (7).

7. Bouchon doseur verseur selon la revendication 6 caractérisé en ce que le bouchon comporte un bossage (14) de forme parallèlépipédique comportant notamment deux faces latérales (16) et une face avant (18), en ce que les faces latérales (16) sont dotées chacune d'une rainure (19) qui débouche dans une rainure (20) pratiquée dans la face avant (18) et en ce que la bordure de l'ouverture (15) du tube verseur (6) est engagée suivant un mouvement axail dans les trois rainures (19 et 20).

8. Bouchon doseur verseur selon la revendication 1 caractérisé:

par un conduit (25) pratiqué dans l'épaisseur du col du bulbe qui débouche, d'une part, dans la chambre sphérique (2) à proximité de la pièce (12) et d'autre part, dans le conduit de remplissage (4),

et par un organe d'obturation (26) qui obture le conduit (25) lorsque la bouteille est renversée.

## Patentansprüche

1. Dosier- und Giesskappe mit einem Gefäss (1) mit einem Hals (8) zur Aufnahme eines Stopfens zur Befestigung auf einem Flaschenhals, mit einer kugelförmigen Kammer (2) in dem Gefäss und einer Verbindung mit der Atmosphäre über eine Öffnung (1) in der Wand des Gefässes und mit dem Inhalt der Flasche durch eine Füll-Leitung (4), deren Ansatzstutzen in dieser Kammer sich auf einem niedrigeren Niveau befindet als dasjenige der Dosierkammer (5), in die ein Giessrohr (6) eingeführt wird, durch das die Dosis Flüssigkeit unter einer Siphonwirkung nach aussen abläuft, wobei dieses Giessrohr in der Dosierkammer (5) an eine Belüftungsleitung (7) angeschlossen ist, die in die Flasche eingeführt wird, wobei diese Leitung (7) sowie die Leitung (4) und die Dosierkammer in einem einzigen Stück (12) eingerichtet sind, das einen ersten zylindrischen Abschnitt (12A) aufweist, der schräg und sekant an einen zweiten Anteil (12B) angeschlossen ist, wobei der als erster bezeichnete Abschnitt (12A) in den Hals (8) eingeführt wird, während der als zweiter bezeichnete Abschnitt (12B) in die kugelförmige Kammer (2) eingeführt ist, dadurch gekennzeichnet, dass die Wand der Dosierkammer mindestens eine zweite durchgebohrte Öffnung (23) enthält, wobei die erste der Anschluss am Boden der Kammer (5) und der Anschluss der letzteren ist, wobei das zu verteilenden Dosier-Volumen durch den Abstand getrennt wird, der diese Öffnung (23) vom Boden der Dosierkammer (5) trennt.

2. Dosier- und Giesskappe nach Anspruch 1, dadurch gekennzeichnet, dass die Öffnung (23) in der Wand der Dosierkammer (5) seitlich zu der geometrischen Ebene angebracht ist, die durch die Längsachse der Flasche und durch die Längsachse dieser Kammer definiert ist.

3. Dosier- und Giesskappe nach Ansprüchen 1 und 2, dadurch gekennzeichnet, dass die Dosierkammer (5) in der Richtung eines ihrer Durchmesser mit zwei Öffnungen (23) durchbohrt ist, die sich immer seitlich zu der Ebene befinden, die durch die Längsachse der Flasche und durch die Längsachse dieser Kammer (5) definiert ist.

4. Dosier- und Giesskappe nach Anspruch 1, dadurch gekennzeichnet, dass die Öffnung (23) aus einer Nut in Trapezform besteht, die sich bis zum Anschluss der Kammer (5) fortsetzt und die in Axialrichtung durch einen Rand (24) begrenzt ist, der sich nach einer zur Ebene des Anschluss parallel verlaufenden Ebene entwickelt.

5. Dosier- und Giesskappe nach Anspruch 1, dadurch gekennzeichnet, dass er mit einem Mittel (23A) zur Verminderung des Volumens der kugelförmigen Kammer (2) ausgestattet ist.

6. Dosier- und Giesskappe nach Anspruch 1, dadurch gekennzeichnet, dass eine interne Noppe (1) in der Dosierkammer (5), die an der zylindrischen Fläche der Kammer vorsteht, angebracht ist und durch eine Belüftungsleitung (7) durchlaufen wird und an ihrem Ende das Giessrohr (6) befestigt wird, dass eine Öffnung (15) aufweist, die mit der Anschlussöffnung des Belüftungsrohres (7) zusammenfällt.

7. Dosier- und Giesskappe nach Anspruch 6, dadurch gekennzeichnet, dass die Kappe einen Noppe in Form eines Parallelepipeds (14) aufweist, deren Seitenflächen (16) mit je einer Rille (19) versehen sind, die in eine Rille (20) ausläuft, die an der Vorderseite (18) angebracht ist und dass der Rand der Öffnung (15) des Giessrohres (6) sich nach einer axialen Bewegung, die sich insbesondere auf die beiden Seitenflächen (16) und eine Vorderfläche (18) erstreckt, in die drei Rillen (19 und 20) einfügt.

8. Dosier- und Giesskappe nach Anspruch 1, dadurch gekennzeichnet, dass:

eine Leitung (25) in der Dicke des Halses der Kammer angebracht ist, die einerseits in die kugelförmige Kammer (2) in der Nähe des Teils (12) und andererseits in die Füll-Leitung (4) ausläuft,

ein Verschlussteil (26) die Leitung (25) verschliesst, wenn die Flasche umgekippt ist.

## Claims

1. Dose pourer comprising a bulb (1) which is equipped with a neck (8) which accepts a cork for attachment in a bottleneck, a spherical chamber (2) is created in the bulb and is in contact with the outside air via an opening (3) created in the bulb wall, and with the bottle contents via a filling tube (4) whose opening in the said chamber is positioned lower than that of the dosing chamber (5). This dosing chamber is penetrated by a dosing tube (6) through which the dose of liquid flows towards the outside due to siphon effect, the said dosing tube being connected in the dosing chamber (5) to a vent tube (7) which penetrates inside the bottle. The said tube (7) as well as the tube (4) and the dosing chamber (5) being arranged to form a single part (12) which is in the form of a first cylindrical section (12A) connected in an oblique and secant manner to a second section (12B). The said first section engaging into the neck (8) and the said second section (12B) into the spherical chamber (2) The pourer is characterized by the wall of the dosing chamber being pierced by a least a second orifice (23)—the first being made up of the opening located between the bottom of the chamber (5) and the opening of the latter, the volume of the dose to be distributed being conditioned by the distance separating this orifice (23) the bottom of the dosing chamber (5).

2. Dose pourer according to Claim 1 characterized by the orifice (23) arranged in the wall of the dosing chamber (5) laterally to the geometric plane defined by the longitudinal axis of the bottle and by the longitudinal axis of the said chamber.

3. Dose pourer according to the Claims 1 and 2 characterized by the dosing chamber (5) being pierced according to one of its diameter by two orifices (23) always positioned laterally to the plane defined by the longitudinal axis of the bottle and by the longitudinal axis of the said chamber (5).

4. Dose pourer according to Claim 1 characterized by the orifice (23) being a trapezoidal cut which runs to the opening of chamber (5) and which is axially limited by an edge (24) which extends following a plane parallel to the plane of the opening.

5. Dose pourer according to Claim 1 characterized by its being equipped with a means (23A) to decrease the volume of the spherical chamber (2).

6. Dose pourer according to Claim 1 characterized by an internal boss (14) in the dosing chamber (5) standing out on the cylindrical face of the chamber. This boss is traversed by a vent tube (7) and accepts, as a attachment, the end of the dosing tube (6) which presents an opening (15) corresponding with the opening of the vent tube (7).

7. Dose pourer according to Claim 6 characterized by the pourer comprising a boss (14) of parallelopipedic shape comprising in particular two lateral faces (16) and one front face (18), by the lateral faces (16), each having a groove (19) which arrives at a groove (20) created in the front face (18), and by the edge of the opening (15) of the dosing tube (6) being engaged by axial movement in the three grooves (19 and 20).

8. Dose pourer according to Claim 1 characterized by:

a tube (25) created in the thickness of the bulb neck which arrives, on the one hand, in the spherical chamber (2) next to part (12) and, on the other hand, in the filling tube (4),

and by a blanking device (26) which blanks off the tube (25) when the bottle is overturned.

Fig.1

Fig. 2

Fig.2 bis

Fig. 4

4

12 A

7

4

COUPE A.A

Fig. 3

18

5

23

23

16

14

12 B

16

4

COUPE B.B

Fig. 5

Fig. 6